Europäisches Patentamt

European Patent Office

Office européen des brevets

(11) Publication number: **0 231 570 B1**

# EUROPEAN PATENT SPECIFICATION

(45) Date of publication of patent specification: **16.10.91**　(51) Int. Cl.<sup>5</sup>: **B23K 35/30, B23K 35/368**

(21) Application number: **86301830.5**

(22) Date of filing: **13.03.86**

(54) Weld bead composition and electrode for producing same.

(30) Priority: **24.01.86 US 822273**

(43) Date of publication of application:
**12.08.87 Bulletin 87/33**

(45) Publication of the grant of the patent:
**16.10.91 Bulletin 91/42**

(84) Designated Contracting States:
**BE CH DE FR GB IT LI LU NL SE**

(56) References cited:
**FR-A- 970 873**
**FR-A- 2 270 982**
**GB-A- 2 155 045**

**PATENT ABSTRACTS OF JAPAN, vol. 4, no.
19 (C-73), 16th February 1980; & JP-A-54 155
139 (SHIN NIPPON SEITETSU K.K.) 12-06-1979**

**WELDING AND METAL FABRICATION, vol. 44,
no. 6, July/August 1976, pages 419-423; D.V.
DORLING et al.: "A comparison of the tough-
ness of self-shielded arc and submerged-
arc weld metals in C-Mn-Nb steels"**

(73) Proprietor: **THE LINCOLN ELECTRIC COM-
PANY**
**22801 St. Clair Avenue**
**Cleveland, Ohio 44117(US)**

(72) Inventor: **Chai, Chang-Shung**
**993 Chelston Road**
**South Euclid Ohio 44121(US)**
Inventor: **McCollister, Jon**
**7648 Mountain Park Drive**
**Mentor Ohio 44060(US)**

(74) Representative: **Spencer, Graham Easdale et
al**
**A.A. Thornton & CO Northumberland House
303-306, High Holborn
London WC1V 7LE(GB)**

EP 0 231 570 B1

## Description

The present invention is concerned with electric arc welding and, more particularly, with a weld bead composition and with an electrode for producing a weld bead having such a composition.

The invention is particularly suitable for electric arc butt welding of relatively thick low carbon (and some low alloy) steel plates, but it may be used wherever steel having high impact values is required.

The various essential elements of the composition (in addition to iron) may be supplied to the molten weld pool in various ways, but the invention is particularly applicable to the use of a bare tubular steel wire having fluxing ingredients in the core which include the various elements necessary to produce the desired weld composition; alternatively, the necessary elements can be included in a flux coating on a solid wire, or in a granular flux to be deposited over the weld or alloyed with the steel of the electrode wire. The elements to be added can be present in the form of metals, alloys, and/or compounds in combination with suitable reducing agents.

In the welding industry, a principal characteristic required of welds is high tensile strength and ductility, coupled with a toughness as measured by the Charpy V-Notch Impact Test and the Crack Tip Opening Displacement (CTOD) test. In the Charpy Test, a chilled sample of prescribed dimensions is placed in a test machine and the energy required to fracture the sample on impact is measured. In the CTOD test, a fatigue crack is developed, then the sample is subjected to stress until it breaks. The higher the energy or CTOD value, the better the weld. Only the Charpy test is referred to hereinafter.

In testing the welding of heavy steel plates, it is conventional to cut samples from the top, bottom and middle of the test weld and to measure the impact strength of each of these samples.

In the welding of heavy steel plates of the order of $1\frac{1}{2}$ (3.8 cm) to 2 (5.1 cm) inches in thickness, it is conventional practice to bevel the edges of the plates, place the sharp edges thus formed in close spaced relationship, weld the root together, and then with a series of overlapping arc weld passes, fill up the V-notch formed by the bevelled edges. In such an operation, each successive weld pass partially melts the previously deposited weld and reheats the metal adjacent to the re-melted metal to a temperature above its melting point.

In such multiple pass welding using the same electrode, it is difficult to obtain acceptable Charpy Impact values over the entire depth of the weld. The desired result can be achieved by changing the electrode used for each successive pass, but this makes the operation complicated, time-consuming, and expensive. The present invention produces acceptable Charpy Impact Test values over the entire depth of the weld using a single electrode.

Another problem is that in order to obtain the desired high impact strengths when using multi-pass welding, it is necessary to impose limitations on the thickness of the weld laid down in each welding pass. (The thickness of a weld is determined by the electrode size, the electrode feed speed, and the travel speed.) As a result of limiting the thickness of each weld, a greater number of passes is required to fill the joint so that a longer time is required to complete the weld.

In addition, welding parameters have to be established and the welding operator has to comply to these parameters. If they are exceeded, welds are obtained which do not have the desired Charpy Impact strength.

Another problem of the prior art, because of the limitation on the thickness of each weld, is that the operators are required when welding vertically extending butt joints to weld from the top downwards. Using the present invention, it is possible to prepare vertical welds having the desired impact strengths by welding vertically upwards, a less costly procedure.

A further problem is variation in the impact strength of the weld from the root to the cap. This can be explained by the fact that electrodes normally contain some form of titanium in the flux, the titanium ending up as a residual component in the weld. Some titanium is necessary to provide the desired impact values, but titanium in excessive amounts is detrimental to the impact value of the weld.

As a result, the electrode has to contain enough titanium that in the root pass (when there is substantial dilution of the electrode metal by the metal of the work-piece which melts and becomes part of the weld), there will be sufficient titanium to provide the desired impact value for the weld. However, as the overlying welds are deposited, there is less and less dilution from the metal of the workpiece and, ultimately, the titanium content of the weld increases to a value at which the impact value begins to decrease. Also, the final or capping weld is never reheated as are the welds of the root pass or intermediate passes so that the final weld does not receive the grain refining effects of reheating. Thus, it is important to produce a capping weld having the desired composition without the need for reheating.

When arc welding steel, fluxes are normally used; these may be provided on the inside of a tube, coated on an electrode wire, or as a pile of granular flux on the weld. Fluxes are used for various purposes

EP 0 231 570 B1

including the addition of alloying elements to the weld, but their main purpose is to exclude or limit nitrogen from the metals being transferred from the electrode wire to the weld pool or those in the weld pool itself. At the temperature of the arc, molecular nitrogen ($N_2$) from the atmosphere tends to break down and the resulting atomic nitrogen is carried into the molten weld puddle. Then as the weld puddle cools, the atomic nitrogen returns to the molecular form and is released as nitrogen gas within the weld, which results in porosity and a defective weld.

Thus when using a bare steel wire and no shielding gas, the fluxing ingredients always include compounds which vaporize in the heat of the arc to exclude nitrogen from the vicinity of the arc. Alternatively, shielding gases coaxial with the electrode wire and the arc can be used to exclude nitrogen. Granular flux deposited on top of the weld through which a bare electrode wire is advanced, has also been used for this purpose.

We have now developed a weld composition which has a high Charpy Impact value, which can be laid down in overlying welds using multi-pass electric arc welding, and which reduces or overcomes the problems of the prior art set out above.

In contrast to the prior art, the present invention makes beneficial use of small amounts of nitrogen in the weld metal, but in the form of a compound of titanium. The titanium content of the weld is relatively high, but the maximum value permitted is less than the critical value at which the impact value of the weld begins to decrease. Also, the titanium content in the final or capping weld is sufficiently low that grain refinement by reheating is not necessary.

The present invention provides a low carbon weld containing sufficient but controlled amounts of micro-particulates of titanium nitride dispersed throughout which provide nucleation seeds around which grain growth is initiated as the steel cools and solidifies, the result being a very fine grain structure of the weld metal which has a high Charpy Impact value. In addition to titanium nitride, a controlled amount of chromium is present in the weld composition of the invention and the permitted amount of aluminium is limited.

Titanium and/or aluminium are conventional weld ingredients; the novelty of the present invention lies in the use of chromium which both lowers the melting point of the weld metal and also acts as a catalyst to promote the formation of titanium nitride.

According to the present invention, therefore, there is provided an electric arc deposited weld bead which comprises low carbon steel and the following additional components (by weight):

0.03 to 0.12% of titanium,
0.01 to 0.04% of nitrogen,
0.05 to 0.30% of chromium, and
less than 0.95% of aluminium.

The invention also includes an electric arc welding electrode for producing a weld according to the invention.

The nitrogen of the weld composition is present as titanium nitride which has a very high melting point of 5306° F (2930° C) (compared with 2777° F (1525° C) for steel) and which is present in the hardened weld as very finely divided or micro-particulates. Each particulate forms a nucleation seed around which grain growth is initiated as the steel cools through its solidification temperature. Because of these many nucleation points, a very fine grained micro-structure is obtained, the titanium nitride functioning as an austenite grain inhibitor.

The addition of titanium or chromium to the weld is not difficult. Either metal can be an ingredient in the flux in the core of a tubular wire or in the coating on the outside of a solid electrode wire, and in both cases can be present as a metal, as an alloy, or as a compound in combination with certain known reducing agents, such as magnesium and/or aluminium, or can be alloyed with the steel of the electrode wire.

It is possible to add the titanium nitride to the weld by using titanium nitride as one of the ingredients in the flux, whether coated on the outside of a solid steel wire, on the inside of a tubular wire, or in a granular flux. Titanium nitride, however, is very expensive and it is preferred to use other cheaper ways of providing the titanium nitride in the weld. In one possibility (not investigated), the titanium nitride could be included as an ingredient in the steel of the electrode wire.

According to the present invention, the titanium nitride is introduced into the weld by providing in the core of a tubular electrode appropriate amounts of titanium and chromium, either as metals, alloys, or oxygen compounds in combination with suitable reducing agents in appropriate amounts and welding with the electrode without excluding the nitrogen of the air from the vicinity of the arc so that the titanium in the electrode combines with the nitrogen of the surrounding atmosphere to form titanium nitride, which is then carried into the weld pool in the required amounts in the form of microscopic particulates. That exposure of the electrode to the nitrogen of the air is important is indicated by tests in which the same electrode when

3

used in a shielding atmosphere of argon gas produced a weld having poor impact strengths.

The oxygen of the air must be prevented from being carried into the weld pool and this is done by including aluminium and/or magnesium, in the form of metals or alloys, as deoxidizers in the core of the tubular steel wire, the aluminium and/or magnesium reacting with the oxygen of the atmosphere to form an oxide which forms part of the slag and which can be disposed of when welding is completed.

When aluminium is used as the deoxidizer, it must always be used in amounts in excess of the amount that will react with the oxygen, with the result that some of the aluminium remains unreacted and is transferred to the weld and shows up as a residual component. Aluminium in too large quantities in the weld has a detrimental effect on its impact strength and is therefore present in the electrode of the invention in an amount such that, having regard to the amount which is not converted to aluminium oxide by the oxygen in the air or by oxygen taken from other compounds in the flux and which is transferred to the weld as a residual component, the aluminium content of the resulting weld is always less than 0.95% by weight.

To reduce the amount of aluminium required to completely deoxidize the weld metal, magnesium can be used as a substitute either in the form of the metal or as an alloy with aluminium. Magnesium, having a boiling point below the solidifying temperature of the steel, does not alloy with the steel.

Chromium has always been considered detrimental to the impact strength of welds and for this reason has normally been excluded from weld compositions. Thus chromium increases the strength of the steel, but lowers its impact strength. It is believed that the use of chromium in a weld composition for the purpose of increasing the impact strength of the weld is a novel feature of the present invention.

Chromium is added to the electrode as a catalyst to promote the formation of titanium nitride. This ensures that the necessary amount of titanium nitride is provided in the weld metal and helps to prevent the build-up of titanium in successive welds during multiple-pass welding. Thus the normal detrimental effect of chromium on the impact strength of the resulting weld is offset by a reduction in the amount of titanium required and an increase in the amount of titanium nitride particulates in the weld metal. Tests have shown that the presence of chromium has no effect on the fine grain microstructure which the present invention provides.

With the exception of chromium, the flux ingredients of the present invention are well known in the art. The novelty of the invention lies in the addition of chromium to the flux composition to serve as a catalyst for combining the titanium and nitrogen in the heat of the arc. The resulting titanium nitride is then carried into the weld pool as a plurality of finely dispersed micro particulates which provide multiple nucleation points where grain growth is initiated and continues as the steel cools and then solidifies.

The chromium also reduces the melting point of the weld metal so that more of each previously deposited layer is melted and grain refined in subsequent passes, thus making it possible to lay down a larger amount of metal in each pass and thereby decreasing the number of passes required to fill up a given weld gap. By decreasing the number of passes, the total time required to complete a given weld is substantially reduced.

Furthermore, by being able to use the same electrode for the root pass, the middle passes, and the cap pass of the weld, i.e. for the complete weld, considerable time is saved in not having to change the welding electrode as was formerly the case in those applications which required high impact strengths throughout the entire weld.

A further interesting feature of the invention is that photomicrographs of a cross section of the resulting weld do not show any clear lines of demarcation between adjacent weld deposits as is the case with multi-pass welds prepared according to the prior art.

Thus the present invention provides a weld composition which meets stringent impact and CTOD requirements and which is suitable for welds joining low carbon and/or some low alloy steels.

The weld composition and electrode of the invention allow the ready welding of circumferential groove welds for heavy wall, large diameter tubular constructions or general plate fabrications and enable welding to be carried out in a vertically upwards or vertically downwards direction, in an overhead or downhand position.

The resulting weld has good mechanical properties whether in the form of large beads and/or thick layers and has excellent notch toughness regardless of the location of the test notch in the weld metal sample.

The electrode of the invention produces high quality, high impact strength welds without the need for externally supplied shielding gases and this allows greater thicknesses of weld metal to be laid down on each welding pass. The electrode is suitable for multi-pass welding on relatively thick steel plates and produces a weld having relatively high impact values over the entire depth of the weld. Thus a given size V-notch formed by the edges of the plates to be butt welded can be filled with weld metal using fewer passes while still obtaining high impact values over the entire thickness of the weld, i.e. the amount of metal laid down in each pass is not critical to the impact values of the finished weld.

The invention also provides a weld, particularly the final or capping weld, which does not require reheating during subsequent passes in order to obtain a high impact value.

In order that the invention may be more fully understood, the following example is provided by way of illustration.

Example

In four separate experiments, welds were prepared between two $1\frac{1}{2}$ inch (3.8 cm) thick A 537 steel plates, the edges of which were bevelled to provide a 45° angle and which were positioned for welding with the lower sharper edges spaced 3/16 inch (0.5 cm) apart. The plates were preheated to 200°F (93°C) and between each welding pass the temperature of the previously deposited weld was allowed to decrease to approximately 200°F (93°C).

Each weld was prepared using one of two type of electrode (A or B), each electrode comprising a low carbon steel tube filled with the flux ingredients. The compositions of the fluxes in the two types of electrode were as follows (by weight of total electrode):

| | Electrode A | Electrode B |
|---|---|---|
| $TiO_2$ | 0.00% | 0.16% |
| $Li_2O$ | 0.28% | 0.28% |
| CaO | 0.29% | 0.29% |
| $SiO_2$ | 0.39% | 0.40% |
| BaO | 1.69% | 1.97% |
| $Fe_2O_3$ | 3.24% | 3.24% |
| $BaF_2$ | 8.44% | 8.44% |
| Fluorides other than $BaF_2$, e.g. those of Li, Si, K, and Sr | 1.35% | 1.35% |
| Titanium other than $TiO_2$ | 0.07% | 0.00% |
| Zirconium | 0.12% | 0.12% |
| Chromium | 0.16% | 0.16% |
| Manganese | 0.43% | 0.45% |
| Nickel | 0.75% | 0.75% |
| Magnesium | 1.33% | 1.19% |
| Aluminium | 1.72% | 1.54% |
| Iron | Balance | Balance |

The following welding parameters were used:

| Arc voltage | Wire feed speed in inches/min (cm/min) | Approximate current in Amps. | Weld metal deposit rate in lbs/hr (kg/hr) |
|---|---|---|---|
| 19-20 | 90 (229) | 225 | 4.1 (1.9) |
| 17-18 | 70 (178) | 175 | 3.1 (1.4) |

Diameter of electrode: 5/64 inch (0.2 cm)
Polarity of DC electrode: Negative
Electrical stickout: ¾ inch (1.9 cm)

In experiments 1 and 2, fifteen welding passes were used to complete each weld. Electrode A was used in experiment 1 and electrode B in experiment 2. The following impact values were obtained for samples taken from the cap, middle and root of the resulting welds:

| Sample | Impact at -40°F (-40°C) in ft.-lbs (joules) | |
| --- | --- | --- |
| | Experiment 1 (Electrode A) | Experiment 2 (Electrode B) |
| Cap | 75 (102) | 82 (111) |
| | 69 (94) | 87 (118) |
| | 110 (149) | 81 (110) |
| | 158 (214) | 112 (152) |
| Middle | 124 (168) | 117 (159) |
| | 110 (149) | 138 (187) |
| | 122 (166) | 132 (179) |
| | 116 (157) | 135 (183) |
| | 118 (160) | - |
| Root | 43 (58) | 57 (77) |
| | 71 (96) | 108 (147) |
| | 83 (113) | 90 (122) |
| | 69 (94) | 85 (115) |

Analysis of the samples taken from the weld of experiment 1 gave the following results (in % by weight):

|         | **C**   | **Mn** | **Si** | **Al** | **N**   | **Cr** |
| ------- | ------- | ------ | ------ | ------ | ------- | ------ |
| Cap:    | 0.056   | 0.81   | 0.05   | 0.80   | 0.036   | 0.10   |
| Middle: | 0.067   | 0.82   | 0.05   | 0.76   | 0.030   | 0.10   |
| Root:   | 0.093   | 0.89   | 0.07   | 0.62   | 0.032   | 0.09   |

|         | **Ti**  | **Zr** | **Ni** | **S**   | **P**   | **O**   |
| ------- | ------- | ------ | ------ | ------- | ------- | ------- |
| Cap:    | 0.053   | 0.032  | 0.59   | 0.003   | 0.004   | <0.01   |
| Middle: | 0.059   | 0.039  | 0.56   | 0.003   | 0.004   | <0.01   |
| Root:   | 0.048   | 0.030  | 0.51   | 0.003   | 0.004   | <0.01   |

In experiments 3 and 4, each of the successive welds was made thicker than those used in experiments 1 and 2 so that only eight welding passes were required to complete each weld. Electrode A was used in experiment 3 and electrode B in experiment 4. The following Impact values were obtained for samples taken from the cap, middle, and root of the resulting welds:

| Sample | Impact at -40° F (40° C) in ft.-lbs (joules) | |
| --- | --- | --- |
| | Experiment 3 (Electrode A) | Experiment 4 (Electrode B) |
| Cap | 118 (169) 122 (166) 192 (261) 138 (187) | 64 (87) 88 (119) 100 (136) 87 (118) |
| Middle | 95 (129) 101 (137) 108 (147) 120 (163) | - - - - |
| Root | 40 (54) 67 (91) 38 (52) 54 (73) | 77 (104) 96 (130) 111 (151) 98 (133) 76 (103) |

Analysis of the samples taken from the weld of experiment 4 gave the following results (in % by weight):

| | C | Mn | Si | Al | N | Cr |
| --- | --- | --- | --- | --- | --- | --- |
| Cap: | 0.041 | 0.83 | 0.18 | 0.78 | 0.036 | 0.15 |
| Middle: | 0.046 | 0.84 | 0.20 | 0.73 | 0.033 | 0.14 |
| Root: | 0.065 | 0.93 | 0.21 | 0.66 | 0.034 | 0.16 |

| | Ti | Zr | Ni | S | P | O |
| --- | --- | --- | --- | --- | --- | --- |
| Cap: | 0.066 | 0.036 | 0.85 | 0.003 | 0.004 | <0.01 |
| Middle: | 0.060 | 0.032 | 0.79 | 0.003 | 0.004 | <0.01 |
| Root: | 0.046 | 0.023 | 0.73 | 0.003 | 0.004 | <0.01 |

Satisfactory welds using the methods of experiments 1 to 4 were also obtained using an electrode comprising a low carbon steel tube containing a flux having the following composition (in % by weight of total electrode):
1.34% of SrO,
3.52% of $Fe_2O_3$,
10.02% of $BaF_2$,
1.68% of fluorides other than $BaF_2$, e.g. those of Li, Si, K and Sr,
0.10% of titanium,
0.10% of chromium,
0.47% of manganese,
0.58% of nickel,
1.38% of magnesium,
1.70% of aluminium,
the balance being iron.

## Claims

1. An electric arc deposited weld bead which comprises low carbon steel and the following additional components (by weight):
0.03 to 0.12% of titanium,
0.01 to 0.04% of nitrogen,

0.05 to 0.30% of chromium, and
less than 0.95% of aluminium.

2. A weld bead according to claim 1, which further comprises (by weight):
0.30 to 1.50% of nickel,
0.04 to 0.15% of carbon,
less than 0.05% of zirconium,
less than 1.60% of manganese,
less than 0.30% of silicon,
less than 0.01% of oxygen,
less than 0.01% of phosphorous, and
less than 0.01% of sulphur.

3. An electric arc welding electrode which comprises low carbon steel and the following additional components:
titanium;
chromium;
at least one of aluminium, carbon, zirconium, manganese, silicon or nickel;
at least one of aluminium, magnesium, or silicon; and
at least one of barium fluoride, lithium fluoride, calcium fluoride, potassium fluoride, silicon fluoride, strontium fluoride, lithium oxide, silica, iron oxide, barium oxide, strontium oxide, or calcium oxide, the titanium, chromium, aluminium, carbon, zirconium, manganese, silicon, nickel, and magnesium being present in the form of the element, an alloy, or a compound, and the titanium, chromium, and aluminium being present in such amounts that said electrode produces a weld bead according to claim 1 or 2.

4. A welding electrode according to claim 3, which comprises a low carbon steel tube containing a core material which comprises (by weight of total electrode);
0.28% of $Li_2O$,
0.29% of CaO,
0.39% of $SiO_2$,
1.69% of BaO,
3.24% of $Fe_2O_3$,
8.44% of $BaF_2$,
1.35% of fluorides other than $BaF_2$,
0.07% of titanium,
0.12% of zirconium,
0.16% of chromium,
0.43% of manganese,
0.75% of nickel,
1.33% of magnesium,
1.72% of aluminium,
the balance being iron.

5. A welding electrode according to claim 3, which comprises a low carbon steel tube containing a core material which comprises (by weight of total electrode):
0.16% of $TiO_2$,
0.28% of $Li_2O$,
0.29% of CaO,
0.40% of $SiO_2$,
1.97% of BaO,
3.24% of $Fe_2O_3$,
8.44% of $BaF_2$,
1.35% of fluorides other than $BaF_2$,
0.12% of zirconium,
0.16% of chromium,
0.45% of manganese,
0.75% of nickel,

1.19% of magnesium,
1.54% of aluminium,
the balance being iron.

6. A welding electrode according to claim 3, which comprises a low carbon steel tube containing a core material which comprises (by weight of total electrode):
1.34% of SrO,
3.52% of $Fe_2O_3$,
10.02% of $BaF_2$,
1.68% of fluorides other than $BaF_2$,
0.10% of titanium,
0.10% of chromium,
0.47% of manganese,
0.58% of nickel,
1.38% of magnesium,
1.70% of aluminium,
the balance being iron.

**Revendications**

1. Un cordon de soudure déposé à l'arc électrique qui comprend de l'acier à faible teneur en carbone et les composants additionnels suivants (en poids) :

0,03 à 0,12 % de titane,
0,01 à 0,04 % d'azote,
0,05 à 0,30 % de chrome, et
moins de 0,95 % d'aluminium.

2. Un cordon de soudure selon la revendication 1, qui comprend en outre (en poids) :

0,30 à 1,50 % de nickel,
0,04 à 0,15 % de carbone,
moins de 0,05 % de zirconium,
moins de 1,60 % de manganèse,
moins de 0,30 % de silicium,
moins de 0,01 % d'oxygène,
moins de 0,01 % de phosphore et
moins de 0,01 % de soufre.

3. Une électrode de soudage à l'arc électrique qui comprend de l'acier à faible teneur en carbone et les composants additionnels suivants :
titane ;
chrome ;
au moins l'un des suivants : aluminium, carbone, zirconium, manganèse, silicium ou nickel ;
au moins l'un des suivants : aluminium, magnésium, ou silicium ; et
au moins l'un des suivants : fluorure de baryum, fluorure de lithium, fluorure de calcium, fluorure de potassium, fluorure de silicium, fluorure de strontium, oxyde de lithium, silice, oxyde de fer, oxyde de baryum, oxyde de strontium, ou oxyde de calcium, le titane, le chrome, l'aluminium, le carbone, le zirconium, le manganèse, le silicium, le nickel, et le magnésium étant présents sous la forme de l'élément, d'un alliage ou d'un composé, et le titane, le chrome et l'aluminium étant présents en quantité telle que ladite électrode produit un cordon de soudure selon la revendication 1 ou 2.

4. Une électrode de soudure conformément à la revendication 3, qui comprend un tube d'acier à faible teneur en carbone contenant un matériau pour coeur qui comprend (en poids de l'électrode totale) :

0,28 % de $Li_2O$,
0,29 % de CaO,
0,39 % de $SiO_2$,

1,69 % de BaO,
3,24 % de $Fe_2O_3$,
8,44 % de $BaF_2$,
1,35 % de fluorures autres que $BaF_2$,
0,07 % de titane,
0,12 % de zirconium,
0,16 % de chrome,
0,43 % de manganèse,
0,75 % de nickel,
1,33 % de magnésium,
1,72 % d'aluminium,
le restant étant du fer.

5. Une électrode de soudure selon la revendication 3, qui comprend un tube d'acier à faible teneur en carbone contenant un matériau pour coeur qui comprend (en poids de l'électrode totale) :

0,16 % de $TiO_2$,
0,28 % de $Li_2O$,
0,29 % de CaO,
0,40 % de $SiO_2$,
1,97 % de BaO,
3,24 % de $Fe_2O_3$,
8,44 % de $BaF_2$,
1,35 % de fluorures autres que $BaF_2$,
0,12 % de zirconium,
0,16 % de chrome,
0,45 % de manganèse,
0,75 % de nickel,
0,19 % de magnésium,
1,54 % d'aluminium,
le restant étant du fer.

6. Une électrode de soudure selon la revendication 3 qui comprend un tube d'acier en faible teneur en carbone contenant un matériau pour coeur qui comprend (en poids de l'électrode totale) :

1,34 % de SrO,
3,52 % de $Fe_2O_3$,
10,02 % de $BaF_2$,
1,68 % de fluorures autres que $BaF_2$,
0,10 % de titane,
0,10 % de chrome,
0,47 % de manganèse,
0,58 % de nickel,
1,38 % de magnésium,
1,70 % d'aluminium,
le restant étant du fer.

**Patentansprüche**

1. Eine durch einen elektrischen Lichtbogen aufgebrachte Schweißraupe, welche Stahl mit einem geringen Kohlenstoffgehalt und die folgenden zusätzlichen Komponenten (in Gewichtsprozenten) umfaßt:

0,03 bis 0,12 % Titan,
0,01 bis 0,04 % Stickstoff,
0,05 bis 0,30 % Chrom, und
weniger als 0,95 % Aluminium.

2. Eine Schweißraupe nach Anspruch 1, welche ferner umfaßt (in Gewichtsprozenten):

0,30 bis 1,50 % Nickel,
0,04 bis 0,15 % Kohlenstoff,
weniger als 0,05 % Zirkon,
weniger als 1,60 % Mangan,
weniger als 0,30 % Silizium,
weniger als 0,01 % Sauerstoff,
weniger als 0,01 % Phosphor, und
weniger als 0,01 % Schwefel.

3. Eine Bogenschweißelektrode, welche Stahl mit einem geringen Kohlenstoffgehalt umfaßt und die folgenden zusätzlichen Komponenten aufweist:

Titan;
Chrom;
wenigstens einen Stoff aus der Gruppe Aluminium, Kohlenstoff, Zirkon, Mangan, Silicium oder Nickel;
wenigstens einen Stoff aus der Gruppe Aluminium, Magnesium, oder Silizium; und
wenigstens einen Stoff aus der Gruppe Bariumfluorid, Lithiumfluorid, Kalziumfluorid, Potassiumfluorid, Siliziumfluorid, Strontiumfluorid, Lithiumoxyd, Siliziumdioxyd, Eisenoxyd, Bariumoxyd, Strontiumoxyd, oder Kalziumoxyd, wobei das Titan, Chrom, Aluminium, der Kohlenstoff, das Zirkon, Mangan, Silizium, Nickel, und Magnesium in der Form der Elemente, einer Legierung oder einer Verbindung vorliegen, und das Titan, das Chrom und Aluminium in solchen Mengen vorliegen, daß die Elektrode eine Schweißraupe nach Anspruch 1 oder 2 erzeugt.

4. Eine Schweißelektrode nach Anspruch 3, welche eine einen Stahl mit niedrigem Kohlenstoffgehalt aufweisende Stahlröhre umfaßt, welche ein Kernmaterial enthält, welches (in Gewichtsprozenten der Gesamtelektrode)

0,28 % $Li_2O$,
0,29 % CaO,
0,39 % $SiO_2$,
1,69 % BaO,
3,24 % $Fe_2O_3$,
8,44 % $BaF_2$,
1,35 % Fluoride, die sich von $BaF_2$ unterscheiden,
0,07 % Titan,
0,12 % Zirkon,
0,16 % Chrom,
0,43 % Mangan,
0,75 % Nickel,
1,33 % Magnesium,
1,72 % Aluminium,

umfaßt, wobei der Ausgleichsprozentsatz Eisen betrifft.

5. Eine Schweißelektrode nach Anspruch 3, welche eine einen Stahl mit niedrigem Kohlenstoffgehalt aufweisende Stahlröhre umfaßt, welche ein Kernmaterial enthält, welches (in Gewichtsprozent der Gesamtelektrode)

0,16 % $TiO_2$,
0,28 % $Li_2O$,
0,29 % CaO,
0,40 % $SiO_2$,
1,97 % BaO,
3,24 % $Fe_2O_3$,
8,44 % $BaF_2$,
1,35 % Fluoride, die sich von $BaF_2$ unterscheiden,
0,12 % Zirkon,

0,16 % Chrom,
0,45 % Mangan,
0,75 % Nickel,
1,19 % Magnesium,
1,54 % Aluminium

umfaßt, wobei der Ausgleichsprozentsatz Eisen betrifft.

6. Eine Schweißelektrode nach Anspruch 3, welche eine einen Stahl mit niedrigem Kohlenstoffgehalt aufweisende Stahlröhre umfaßt, welche ein Kernmaterial aufweist, welches (in Gewichtsprozenten der Gesamtelektrode)

1,34 % SrO,
3,52 % $Fe_2O_3$,
10,02 % $BaF_2$,
1,68 % Fluoride, die sich von $BaF_2$ unterscheiden,
0,10 % Titan,
0,10 % Chrom,
0,47 % Mangan,
0,58 % Nickel,
1,38 % Magnesium,
1,70 % Aluminium,

umfaßt, wobei der Ausgleichsprozentsatz Eisen betrifft.